# EUROPÄISCHE PATENTANMELDUNG

(11) **EP 3 072 577 A1**
(43) Veröffentlichungstag der Anmeldung: **28.09.2016**
(21) Anmeldenummer: 16160810.4
(22) Anmeldetag: 17.03.2016
(51) Int. Cl.: B01D 61/02, B01D 61/12, B01D 61/42, C02F 1/44

(54) **VERFAHREN UND EINE VORRICHTUNG ZUR BEHANDLUNG EINER FLÜSSIGKEIT**

(30) Priorität: 27.03.2015 DE 102015205641
(71) Anmelder: Bilfinger Industrietechnik Salzburg GmbH, 70565 Stuttgart (DE)
(72) Erfinder: Kast, Dieter, 71154 Nufringen (DE); Oskedra, Zbigniew, 71665 Vaihingen / Enz (DE); Renner, Uta, 70794 Filderstadt-Bernhausen (DE)
(74) Vertreter: Patent- und Rechtsanwälte Ullrich & Naumann

(57) **Zusammenfassung**

Ein Verfahren zur Behandlung einer Flüssigkeit, wobei die Konzentration mindestens einer Substanz in der Flüssigkeit durch ein von einer Einspeiseströmung (1) der Flüssigkeit durchströmtes Mittel (2) derart beeinflusst wird, dass eine Permeatströmung (3) mit einer reduzierten Konzentration und eine Konzentratströmung (4) mit einer erhöhten Konzentration der mindestens einen Substanz entstehen, und wobei das Verhältnis von Permeatströmungsmenge zu Einspeiseströmungsmenge vorgegeben und während des Verfahrens konstant gehalten wird, ist im Hinblick auf die Gewährleistung einer gewünschten Qualität des Permeats derart ausgestaltet und weitergebildet, dass die Konzentratströmung (4) in eine Verwurfströmung (5) und in eine Rückführströmung (6) zur zumindest teilweisen Rückführung in die Einspeiseströmung (1) aufgeteilt wird, dass der Durchfluss der Verwurfströmung (5) in Abhängigkeit von einem definierbaren und von der Konzentration der mindestens einen Substanz abhängigen Parameter der Permeatströmung (3) und/oder der Einspeiseströmung (1) und/oder der Konzentratströmung (4) derart geregelt wird, dass ein vorgebbarer Wert des Parameters im Wesentlichen konstant gehalten wird, und dass der Durchfluss der Konzentratströmung (4) und damit auch das Verhältnis von Permeatströmungsmenge zu Einspeiseströmungsmenge durch eine Regelung des Durchflusses der Rückführströmung (6) konstant gehalten wird. Des Weiteren ist eine entsprechende Vorrichtung zur Behandlung einer Flüssigkeit mit dem obigen Verfahren angegeben.

## Beschreibung

Die Erfindung betrifft ein Verfahren zur Behandlung einer Flüssigkeit, wobei die Konzentration mindestens einer Substanz in der Flüssigkeit durch ein von einer Einspeiseströmung der Flüssigkeit durchströmtes Mittel derart beeinflusst wird, dass eine Permeatströmung mit einer reduzierten Konzentration und eine Konzentratströmung mit einer erhöhten Konzentration der mindestens einen Substanz entstehen, und wobei das Verhältnis von Permeatströmungsmenge zu Einspeiseströmungsmenge vorgegeben und während des Verfahrens im Wesentlichen konstant gehalten wird. Des Weiteren betrifft die Erfindung eine entsprechende Vorrichtung zur Behandlung einer Flüssigkeit mit diesem Verfahren.

Verfahren und Vorrichtungen der eingangs genannten Art sind aus der Praxis bekannt und basieren beispielsweise auf dem Prinzip der Umkehrosmose oder der Nanofiltration. Die Flüssigkeit, in der die Konzentration einer bestimmten Substanz verringert werden soll, ist bei der Umkehrosmose durch eine halbdurchlässige Membran von der Flüssigkeit getrennt, in der die Konzentration erhöht werden soll. Diese wird einem Druck ausgesetzt, der höher sein muss als der Druck, der durch das osmotische Verlangen zum Konzentrationsausgleich entsteht. Dadurch können Moleküle der Flüssigkeit gegen ihre "natürliche" osmotische Ausbreitungsrichtung wandern. Das Verfahren drückt sie in das Kompartiment, in dem gelöste Stoffe weniger konzentriert vorliegen. Die Nanofiltration ist ein druckgetriebenes Membranverfahren, bei dem gelöste Bestandteile durch die Membran zurückgehalten werden. Die Umkehrosmose bildet gegenüber der Nanofiltration das feinere Verfahren, bei dem die Trennung gelöster Substanzen von der Flüssigkeit vollständiger ist.

Ein Anwendungsgebiet für eine derartige Behandlung einer Flüssigkeit ist beispielsweise die Wasseraufbereitung, bei der mit den bekannten Verfahren Wasser entsalzt wird. Aus in Form einer Einspeiseströmung vorliegendem Speisewasser entsteht dabei entsalztes Wasser - Permeat - und Konzentrat, das das Salz enthält. Hierbei wird das Speisewasser mittels eines in Form einer Umkehrosmoseeinheit oder Nanofiltrationseinheit vorliegenden Mittels zur Beeinflussung der Flüssigkeit derart beeinflusst, dass eine Permeatströmung mit einer reduzierten Konzentration und eine Konzentratströmung mit einer erhöhten Konzentration des Salzes entstehen.

Das Verhältnis von Permeatströmungsmenge zu Einspeiseströmungsmenge wird als Ausbeute oder WCF-Wert - Water Conversion Factor - bezeichnet. Das Permeat kann durch eine Qualitätsmessung wie beispielsweise die Messung der Leitfähigkeit überwacht werden.

Bei der Betrachtung eines Gesamtsystems ist dabei zwischen einem internen Water Conversion Factor - hier "interner WCF" genannt - und einer Ausbeute über das Gesamtsystem - hier "Systemausbeute" genannt - zu unterscheiden. Der interne WCF betrachtet nur die Membranstufe oder das Mittel selbst hinsichtlich Einspeise-Zulauf, Konzentrat und Permeat. Die Systemausbeute betrachtet das Gesamtsystem von der Einspeisung bis zur Produktabnahme und der Einleitung des üblicherweise in eine Abwasserleitung geführten Konzentrats, d.h. hier werden auch weitergehende Aufbereitungsschritte wie beispielsweise eine Elektrodialyse, Ultrafiltration usw. mit einbezogen.

Bei beispielsweise der Auslegung einer Umkehrosmoseeinrichtung für eine Wasserentsalzung wird der interne WCF in Abhängigkeit von der Qualität des Speisewassers und den Strömungsverhältnissen festgelegt. Ein hoher Salzgehalt im Speisewasser bedingt beispielsweise einen niedrigeren WCF. D.h., es wird mehr Konzentrat gebildet. Dieses Konzentrat wird normalerweise aus dem System ausgeleitet und verworfen. Üblicherweise beträgt der interne WCF einer Umkehrosmoseanlage je nach Auslegung zwischen 60% und 80%. Dabei wird dieser definierte interne WCF üblicherweise während einer Umkehrosmoseanwendung konstant gehalten.

Ein gattungsgemäßes Verfahren zur Behandlung einer Flüssigkeit sowie eine entsprechende Vorrichtung sind beispielsweise aus der EP 0 899 239 A1 bekannt, wobei das bekannte Verfahren und die bekannte Vorrichtung auf der Umkehrosmose oder Nanofiltration basieren.

Insbesondere im Bereich der Wasseraufbereitung und genauer gesagt der Wasserentsalzung wird eine gleichbleibende Permeatqualität angestrebt. Die Optimierung dieser Qualität bei möglichst geringen Kosten ist wünschenswert.

Der vorliegenden Erfindung liegt daher die Aufgabe zugrunde, ein Verfahren sowie eine Vorrichtung zur Behandlung einer Flüssigkeit der eingangs genannten Art derart auszugestalten und weiterzubilden, dass eine gewünschte Qualität des Permeats mit konstruktiv einfachen Mitteln in besonders sicherer und kostengünstiger Weise erhalten wird.

Erfindungsgemäß wird die voranstehende Aufgabe durch ein Verfahren zur Behandlung einer Flüssigkeit mit den Merkmalen des Anspruchs 1 sowie durch eine entsprechende Vorrichtung zur Behandlung einer Flüssigkeit mit den Merkmalen des Anspruchs 10 gelöst. Danach ist das Verfahren dadurch gekennzeichnet, dass die Konzentratströmung in eine Verwurfströmung und in eine Rückführströmung zur zumindest teilweisen Rückführung in die Einspeiseströmung aufgeteilt wird, dass der Durchfluss der Verwurfströmung in Abhängigkeit von einem definierbaren und von der Konzentration der mindestens einen Substanz abhängigen Parameter der Permeatströmung und/oder der Einspeiseströmung und/oder der Konzentratströmung derart geregelt wird, dass ein vorgebbarer Wert des Parameters im Wesentlichen konstant gehalten wird, und dass der Durchfluss der Konzentratströmung und damit auch das Verhältnis von Permeatströmungsmenge zu Einspeiseströmungsmenge durch eine Regelung des Durchflusses der Rückführströmung konstant gehalten wird.

In erfindungsgemäßer Weise ist erkannt worden, dass die voranstehende Aufgabe durch eine geschickte Regelung der vom Mittel wegströmenden Konzentratströmung auf überraschend einfache Weise gelöst wird. Hierzu ist in erfindungsgemäßer Weise zunächst die Konzentratströmung in eine Verwurfströmung und in eine Rückführströmung aufgeteilt, wobei die Rückführströmung eine zumindest teilweise Rückführung der Konzentratströmung in die Einspeiseströmung ermöglicht. Des Weiteren wird im Konkreten der Durchfluss der Verwurfströmung in Abhängigkeit von einem definierbaren Parameter der Permeatströmung und/oder der Einspeiseströmung und/oder der Konzentratströmung derart geregelt, dass ein vorgebbarer Wert des Parameters im Wesentlichen konstant gehalten wird. Dieser Parameter spiegelt in vorteilhafter Weise eine vorgebbare Qualität des Permeats wider. Dabei ist der Parameter von der Konzentration der mindestens einen Substanz abhängig, so dass die Regelung der Verwurfströmung auf die Konzentration der mindestens einen Substanz in der Permeatströmung und/oder der Einspeiseströmung und/oder der Konzentratströmung und damit auf den Parameter wirkt. Im Hinblick auf eine Konstanthaltung des Verhältnisses von Permeatströmungsmenge zu Einspeiseströmungsmenge und damit zur Realisierung gleichbleibender hydraulischer Verhältnisse wird weiterhin der Durchfluss der Konzentratströmung und damit auch das Verhältnis von Permeatströmungsmenge zu Einspeiseströmungsmenge durch eine Regelung des Durchflusses der Rückführströmung konstant gehalten. Dies bedeutet eine Konstanthaltung des internen WCF.

Im Ergebnis kann durch die Erfindung eine gewünschte Qualität des Permeats mit konstruktiv einfachen Mitteln in besonders sicherer Weise erhalten werden. In weiter vorteilhafter Weise ermöglicht die zumindest teilweise Rückführung der Konzenratströmung in die Einspeiseströmung ein Reduzieren der Einleitung der Konzentratströmung in beispielsweise einen Abwasserkanal. Dies liegt beispielsweise in einem Fall vor, in dem die Qualität des Permeats bereits derart ausreichend ist, dass nicht das gesamte Konzentrat in das Abwasser geleitet werden muss, sondern eine teilweise Rückführung des Konzentrats in die Einspeiseströmung möglich ist, ohne die Qualität des Permeats unter das gewünschte Qualitätsniveau zu verschlechtern.

Bei dem erfindungsgemäßen Verfahren und der erfindungsgemäßen Vorrichtung wird eine gewünschte Qualität des Permeats mit konstruktiv einfachen Mitteln in besonders sicherer Weise erhalten, wobei bei gleichbleibenden hydraulischen Verhältnissen innerhalb der Vorrichtung, insbesondere bei gleichbleibendem internen WCF, der Verwurf an Konzentrat der Gesamtvorrichtung qualitätsabhängig so angepasst wird, dass lediglich die zur Konstanthaltung des vorgebbaren Werts des Parameters erforderliche Menge des Konzentrats über den Durchfluss der Verwurfströmung verworfen wird.

Bei einem bevorzugten Ausführungsbeispiel des Verfahrens kann das Mittel eine Umkehrosmoseeinrichtung oder eine Nanofiltrationseinrichtung aufweisen. Eine Auswahl zwischen diesen Einrichtungen kann vom jeweiligen Anwendungsfall abhängig gemacht werden.

In besonders vorteilhafter Weise kann der Parameter die Leitfähigkeit der Permeatströmung und/oder der Einspeiseströmung und/oder der Konzentratströmung sein. Ein derartiger Parameter gibt insbesondere bei einer Wasserentsalzung in besonders sicherer Weise Auskunft über die Qualität des Permeats.

Zur sicheren Bestimmung des Parameters kann der Permeatströmung und/oder der Einspeiseströmung und/oder der Konzentratströmung ein Parameter-Messgerät zugeordnet sein. Insoweit kann eine direkte und sichere Messung des Parameters in der Permeatströmung und/oder der Einspeiseströmung und/oder der Konzentratströmung auf einfache Weise erfolgen.

Bei einem konkreten Ausführungsbeispiel kann der Verwurfströmung ein mit einem Durchfluss-Regler zusammenwirkendes erstes Regelventil zugeordnet sein, wobei der Durchfluss-Regler durch das Parameter-Messgerät aufgenommene Messwerte empfängt. Hierdurch lässt sich in konkreter und einfacher Weise die Regelung des Durchflusses der Verwurfströmung in Abhängigkeit von dem definierbaren Paramter bewerkstelligen.

Zur Messung des Durchflusses der Konzentratströmung aus dem Mittel kann der Konzentratströmung in konkreter Weise ein Durchfluss-Messgerät zugeordnet sein. Dieses kann in vorteilhafter Weise vor der Aufteilung der Konzentratströmung in eine Verwurfströmung und in eine Rückführströmung im Strömungspfad der Konzentratströmung angeordnet sein. Hierdurch wird in jedem Fall die gesamte Konzentratströmung aus dem Mittel gemessen.

Bei einer weiteren vorteilhaften konkreten Ausgestaltung kann der Rückführströmung ein mit einem Durchfluss-Regler zusammenwirkendes zweites Regelventil zugeordnet sein, wobei der Durchfluss-Regler durch das Durchfluss-Messgerät aufgenommene Messwerte empfängt, so dass der Durchfluss der Konzentratströmung mittels der Regelung des zweiten Regelventils konstant gehalten wird. Dabei detektiert das Durchfluss-Messgerät auch Veränderungen des Durchflusses, die durch eine Veränderung des Durchflusses durch das erste Regelventil verursacht werden. Insoweit kann die Regelung des zweiten Regelventils auf Regelungen des ersten Regelventils reagieren.

Im Hinblick auf eine weitere Behandlung oder Aufbereitung einer Flüssigkeit kann der Permeatströmung zusätzlich eine Elektrodialyseeinrichtung zugeordnet sein. Hierdurch lässt sich eine besonders hohe Qualität des Permeats erreichen.

Bei einer weiteren vorteilhaften Ausgestaltung des erfindungsgemäßen Verfahrens oder der erfindungsgemäßen Vorrichtung kann eine vorzugsweise ventilgesteuerte Strömungsverbindung zwischen der Permeatströmung und der Einspeiseströmung realisiert werden. Eine derartige Strömungsverbindung ermöglicht eine Zirkulation, bei der das Permeat in die Einspeiseströmung geleitet und wieder dem Mittel zugeführt wird. In einer derartigen Situation kann die Verwurfströmung zum Abwasser auf Null reduziert werden, wodurch Abwasserkosten vermieden werden können. Eine derartige Situation liegt beispielswiese vor, wenn keine Permeatabnahme durch beispielsweise eine Produktion in einem Industriebetrieb erfolgt. Im Ergebnis liegt dann ein reiner Kreislaufbetrieb ohne Permeatabnahme aber bei gleichbleibenden hydraulischen Verhältnissen im Bereich des Mittels vor.

Bei dem erfindungsgemäßen Verfahren und bei der erfindungsgemäßen Vorrichtung wird bei gleichbleibenden hydraulischen Verhältnissen innerhalb der Vorrichtung - also gleichbleibendem internen WCF - der Konzentratverwurf des Gesamtsystems qualitätsabhängig so angepasst, dass lediglich die absolut notwendige Menge des Konzentrats verworfen wird und gegebenenfalls ein Teil des Konzentrats wieder vor das Mittel eingespeist wird. Im Extremfall, d.h. bei einem reinen Kreislaufbetrieb ohne Permeatabnahme durch die Produktion, kann dadurch die Konzentratableitung auf Null reduziert werden. Hierdurch werden unnötige Abwasserkosten vermieden.

Insbesondere kann durch die Erfindung vorteilhaft sicher gestellt werden, dass sich die Vorrichtung automatisch auf wechselnde Flüssigkeitsqualitäten, beispielsweise Rohwasserkonzentrationen, einstellt und die oben genannten Vorteile auch bei wechselnden zugeführten Flüssigkeitsqualitäten oder Rohwasserqualitäten gegeben sind. Bei bisherigen Vorrichtungen wird oftmals eine konstante WCF-Regelung angewendet, die nicht auf Veränderungen der Qualität der zugeführten Flüssigkeit und/oder der Permeatabnahme reagiert und dadurch nicht in der Lage ist, im laufenden Verfahren oder Produktionsprozess die erzeugte Abwassermenge oder Verwurfmenge zu optimieren.

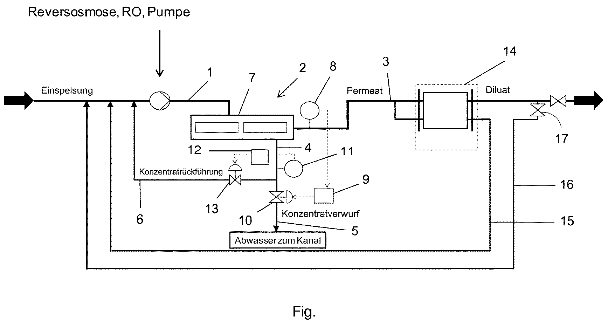

Es gibt nun verschiedene Möglichkeiten, die Lehre der vorliegenden Erfindung in vorteilhafter Weise auszugestalten und weiterzubilden. Dazu ist einerseits auf die dem Anspruch 1 nachgeordneten Ansprüche und andererseits auf die nachfolgende Erläuterung eines bevorzugten Ausführungsbeispiels der Erfindung anhand der Zeichnung zu verweisen. In Verbindung mit der Erläuterung des bevorzugten Ausführungsbeispiels der Erfindung anhand der Zeichnung werden auch im Allgemeinen bevorzugte Ausgestaltungen und Weiterbildungen der Lehre erläutert. In der Zeichnung zeigt die einzige
- Fig.: in einer schematischen Darstellung ein Ausführungsbeispiel einer erfindungsgemäßen Vorrichtung zur Behandlung einer Flüssigkeit mit einer Umkehrosmoseeinrichtung.

Die einzige Fig. zeigt in einer schematischen Darstellung ein Ausführungsbeispiel einer erfindungsgemäßen Vorrichtung zur Behandlung einer Flüssigkeit, wobei die Konzentration mindestens einer Substanz in der Flüssigkeit durch ein von einer Einspeiseströmung 1 der Flüssigkeit durchströmtes Mittel 2 derart beeinflusst wird, dass eine Permeatströmung 3 mit einer reduzierten Konzentration und eine Konzentratströmung 4 mit einer erhöhten Konzentration der mindestens einen Substanz entstehen.

Im Hinblick auf die Bereitstellung einer gewünschten Qualität des Permeats mit konstruktiv einfachen und sicheren Mitteln wird die Konzentratströmung 4 in eine Verwurfströmung 5 und in eine Rückführströmung 6 zur zumindest teilweisen Rückführung in die Einspeiseströmung 1 aufgeteilt. Der Durchfluss der Verwurfströmung 5 wird in Abhängigkeit von einem definierbaren und von der Konzentration der mindestens einen Substanz abhängigen Parameter der Permeatströmung 3 derart geregelt, dass ein vorgebbarer Wert des Parameters im Wesentlichen konstant gehalten wird. Der Durchfluss der Konzentratströmung 4 und damit auch das Verhältnis von Permeatströmungsmenge zu Einspeiseströmungsmenge wird durch eine Regelung des Durchflusses der Rückführströmung 6 konstant gehalten, die zusätzlich zu der Regelung des Durchflusses der Verwurfströmung 5 durchgeführt wird.

Bei dem hier gezeigten Ausführungsbeispiel ist das Mittel 2 durch eine Umkehrosmoseeinrichtung 7 realisiert. Des Weiteren ist der Parameter die Leitfähigkeit der Permeatströmung 3, so dass beispielsweise ein Salzgehalt der Permeatströmung 3 bei einer Wasseraufbereitung geregelt werden kann. Hierzu ist der Permeatströmung 3 ein Parameter-Messgerät 8 zugeordnet.

Im Konkreten ist der Verwurfströmung 5 ein mit einem Durchfluss-Regler 9 zusammenwirkendes erstes Regelventil 10 zugeordnet, wobei der Durchfluss-Regler 9 durch das Parameter-Messgerät 8 aufgenommene Messwerte empfängt und basierend auf diesen Messwerten die Regelung des Regelventils 10 vornimmt. Dabei stellt das Regelventil 10 einen konstanten Parameterwert in der Permeatströmung 3 ein, indem es den Verwurf an Konzentrat durch die Durchflussregelung der Verwurfströmung 5 verändert. Verworfenes Konzentrat wird in einen Abwasserkanal geleitet. Steigt beispielsweise die Leitfähigkeit in der Permeatströmung 3 an, so erhöht der Durchfluss-Regler 9 den Konzentratverwurf bzw. den Durchfluss der Verwurfströmung 5. Sinkt die Leitfähigkeit in der Permeatströmung 3, so wird der Durchfluss der Verwurfströmung 5 gedrosselt.

Der Konzentratströmung 4 ist ein Durchfluss-Messgerät 11 zur Messung des Durchflusses der Konzentratströmung 4 zugeordnet. Des Weiteren ist der Rückführströmung 6 ein mit einem Durchfluss-Regler 12 zusammenwirkendes zweites Regelventil 13 zugeordnet, wobei der Durchfluss-Regler 12 durch das Durchfluss-Messgerät 11 aufgenommene Messwerte empfängt, so dass der Durchfluss der Konzentratströmung 4 mittels der Regelung des zweiten Regelventils 13 konstant gehalten wird. Im Konkreten stellt das in der Rückführströmung 6 installierte Regelventil 13 eine konstante Konzentratströmung 4 ein. Wird der Durchfluss der Verwurfströmung 5 erhöht, so drosselt der Durchfluss-Regler 12 den Durchfluss der Rückführströmung 6. Sinkt der Durchfluss der Verwurfströmung 5, so wird der Durchfluss der Rückführströmung 6 erhöht. Im Ergebnis bleibt der Durchfluss der gesamten Konzentratströmung 4, die aus dem Mittel 2 fließt, konstant. Entsprechend dieser Regelung wird die Abwassermenge - der Konzentratverwurf - im Vergleich zu herkömmlichen Vorrichtungen reduziert, die keine derartige Rückführregelung aufweisen.

Bei dem hier gezeigten Ausführungsbeispiel ist der Permeatströmung 3 zusätzlich eine Elektrodialyseeinrichtung 14 zugeordnet. Mittels dieser Elektrodialyseeinrichtung 14 kann eine weitere Behandlung der Flüssigkeit erfolgen. Von der Elektrodialyseeinrichtung 14 führt eine Strömungsverbindung 15 in die Einspeiseströmung 1 zurück.

Des Weiteren ist eine ventilgesteuerte Strömungsverbindung 16 zwischen der Permeatströmung 3 und der Einspeiseströmung 1 realisiert. Falls keine Produktabnahme oder Permeatabnahme stattfindet, kann die Permeatströmung 3 über ein drittes Regelventil 17 und durch die Strömungsverbindung 16 in die Einspeiseströmung 1 zurückgeleitet werden. Dies ermöglicht eine Zirkulation der Permeatströmung 3, wobei die hydraulischen Verhältnisse im Mittel 2 aufgrund der oben beschriebenen Regelung der Konzentratströmung 4 unverändert bleiben. In diesem Zirkulationsfall kann der Durchfluss der Verwurfströmung 5 auf Null reduziert werden, so dass keinerlei Abwasserkosten entstehen.

Falls bei dem beschriebenen Ausführungsbeispiel keine Elektrodialyseeinrichtung 14 vorgesehen ist, so ist auch keine weitere Strömungsverbindung 15 vorgesehen. In diesem Fall wird die Permeatströmung 3 zu einer Produktabnahme geführt oder teilweise oder auch vollständig über die Strömungsverbindung 16 in die Einspeiseströmung 1 rückgeführt.

Hinsichtlich weiterer vorteilhafter Ausgestaltungen des erfindungsgemäßen Verfahrens und der erfindungsgemäßen Vorrichtung wird zur Vermeidung von Wiederholungen auf den allgemeinen Teil der Beschreibung sowie auf die beigefügten Ansprüche verwiesen.

Schließlich sei ausdrücklich darauf hingewiesen, dass das voranstehende Ausführungsbeispiel lediglich zur Erörterung der beanspruchten Lehre dient und diese nicht auf das Ausführungsbeispiel einschränkt.

### Bezugszeichenliste

- 1: Einspeiseströmung
- 2: Mittel
- 3: Permeatströmung
- 4: Konzentratströmung
- 5: Verwurfströmung
- 6: Rückführströmung
- 7: Umkehrosmoseeinrichtung
- 8: Parameter-Messgerät
- 9: Durchfluss-Regler
- 10: erstes Regelventil
- 11: Durchfluss-Messgerät
- 12: Durchfluss-Regler
- 13: zweites Regelventil
- 14: Elektrodialyseeinrichtung
- 15: Strömungsverbindung
- 16: Strömungsverbindung
- 17: drittes Regelventil

## Patentansprüche

1. Verfahren zur Behandlung einer Flüssigkeit, wobei die Konzentration mindestens einer Substanz in der Flüssigkeit durch ein von einer Einspeiseströmung (1) der Flüssigkeit durchströmtes Mittel (2) derart beeinflusst wird, dass eine Permeatströmung (3) mit einer reduzierten Konzentration und eine Konzentratströmung (4) mit einer erhöhten Konzentration der mindestens einen Substanz entstehen, und wobei das Verhältnis von Permeatströmungsmenge zu Einspeiseströmungsmenge vorgegeben und während des Verfahrens konstant gehalten wird,
**dadurch gekennzeichnet, dass** die Konzentratströmung (4) in eine Verwurfströmung (5) und in eine Rückführströmung (6) zur zumindest teilweisen Rückführung in die Einspeiseströmung (1) aufgeteilt wird, dass der Durchfluss der Verwurfströmung (5) in Abhängigkeit von einem definierbaren und von der Konzentration der mindestens einen Substanz abhängigen Parameter der Permeatströmung (3) und/oder der Einspeiseströmung (1) und/oder der Konzentratströmung (4) derart geregelt wird, dass ein vorgebbarer Wert des Parameters im Wesentlichen konstant gehalten wird, und dass der Durchfluss der Konzentratströmung (4) und damit auch das Verhältnis von Permeatströmungsmenge zu Einspeiseströmungsmenge durch eine Regelung des Durchflusses der Rückführströmung (6) konstant gehalten wird.

2. Verfahren nach Anspruch 1, **dadurch gekennzeichnet, dass** das Mittel (2) eine Umkehrosmoseeinrichtung (7) oder eine Nanofiltrationseinrichtung aufweist.

3. Verfahren nach Anspruch 1 oder 2, **dadurch gekennzeichnet, dass** der Parameter die Leitfähigkeit der Permeatströmung (3) und/oder der Einspeiseströmung (1) und/oder der Konzentratströmung (4) ist.

4. Verfahren nach einem der Ansprüche 1 bis 3, **dadurch gekennzeichnet, dass** der Permeatströmung (3) und/oder der Einspeiseströmung (1) und/oder der Konzentratströmung (4) ein Parameter-Messgerät (8) zugeordnet ist.

5. Verfahren nach Anspruch 4, **dadurch gekennzeichnet, dass** der Verwurfströmung (5) ein mit einem Durchfluss-Regler (9) zusammenwirkendes erstes Regelventil (10) zugeordnet ist, wobei der Durchfluss-Regler (9) durch das Parameter-Messgerät (8) aufgenommene Messwerte empfängt.

6. Verfahren nach einem der Ansprüche 1 bis 5, **dadurch gekennzeichnet, dass** der Konzentratströmung (4) ein Durchfluss-Messgerät (11) zugeordnet ist.

7. Verfahren nach Anspruch 6, **dadurch gekennzeichnet, dass** der Rückführströmung (6) ein mit einem Durchfluss-Regler (12) zusammenwirkendes zweites Regelventil (13) zugeordnet ist, wobei der Durchfluss-Regler (12) durch das Durchfluss-Messgerät (11) aufgenommene Messwerte empfängt, so dass der Durchfluss der Konzentratströmung (4) mittels der Regelung des zweiten Regelventils (13) konstant gehalten wird.

8. Verfahren nach einem der Ansprüche 1 bis 7, **dadurch gekennzeichnet, dass** der Permeatströmung (3) zusätzlich eine Elektrodialyseeinrichtung (14) zugeordnet ist.

9. Verfahren nach einem der Ansprüche 1 bis 8, **dadurch gekennzeichnet, dass** eine vorzugsweise ventilgesteuerte Strömungsverbindung (16) zwischen der Permeatströmung (3) und der Einspeiseströmung (1) realisiert ist.

10. Vorrichtung zur Behandlung einer Flüssigkeit mit dem Verfahren nach einem der Ansprüche 1 bis 9.
